# FASCICULE DE BREVET EUROPEEN

(11) **EP 2 328 781 B1**
(45) Date de publication et mention de la délivrance du brevet: **29.01.2014**
(21) Numéro de dépôt: 09752416.9
(22) Date de dépôt: 25.09.2009
(51) Int. Cl.: B60R 7/06

(54) **BOITE A GANTS POUR VEHICULE AUTOMOBILE**
KRAFTFAHRZEUGHANDSCHUHFACH
AUTOMOBILE GLOVE COMPARTMENT

(30) Priorité: 26.09.2008 FR 0856493; 04.03.2009 FR 0951370
(43) Date de publication de la demande: 08.06.2011
(73) Titulaire: Faurecia Intérieur Industrie, 92000 Nanterre (FR)
(72) Inventeur: GAYON, David, F-95290 L'Isle Adam (FR); BILLON, Jean-Rémi, F-75019 Paris (FR); DA COSTA PITO, Sergio, F-95800 Cergy (FR); MOREL, Jean-Pierre, F-95650 Boissy l'Ailllerie (FR)
(74) Mandataire: Michelet, Alain
(86) Numéro de dépôt international: PCT/FR2009/051826
(87) Numéro de publication internationale: WO 2010/034953

(56) Documents cités:
- EP-A- 0 721 858
- EP-A- 1 928 699
- WO-A-93/11968
- FR-A- 2 752 792
- US-A- 2 796 310
- US-A- 2 883 234

## Description

L'invention concerne une boîte à gants pour véhicule automobile.

Les véhicules automobiles sont pour la plupart équipés d'une boîte à gants disposée à l'intérieur de l'habitacle. Cette boîte à gants est encastrée sous la planche de bord du véhicule du côté passager et est destinée au rangement d'objets divers.

Ces boîtes à gants comprennent un espace de rangement et une porte mobile par rapport à l'espace de rangement entre une position fermée d'obturation d'une ouverture principale et une position ouverte de dégagement de l'ouverture principale.

Des objets sont souvent entassés dans le fond de la boîte à gants et ne sont pas facilement accessibles. L'utilisateur doit d'abord retirer les objets disposés à l'avant de la boîte à gants pour accéder à ceux rangés dans le fond de la boîte à gants.

Il existe des solutions connues comme celle du document US 2,796,310 (qui représente l'etat de la technique comme mentionné dans le preambule de la revendication 1) de l'art antérieur consistant à fournir un tiroir pouvant coulisser entre une première position dans laquelle ce dernier est rangé dans un espace de rangement de la boîte à gants et une seconde position dans laquelle le tiroir est partiellement en dehors de l'espace de rangement. Ce tiroir est relié à la porte par un moyen de liaison qui permet de synchroniser le mouvement de la porte avec celui du tiroir.

Néanmoins, cette solution est contraignante car le tiroir doit être ressorti de l'espace de rangement presque complètement pour que l'utilisateur puisse accéder aux objets rangés dans le fond du tiroir. Cette solution ne permet pas d'utiliser des tiroirs de grande profondeur.

L'invention a pour objet de pallier à cet inconvénient et de fournir une boîte à gants pour véhicule automobile permettant un accès facile aux objets disposés dans le fond de la boîte à gants.

A cet effet, l'invention concerne une boîte à gants pour véhicule automobile comprenant un espace de rangement encastré à l'intérieur d'une planche de bord et accessible par une ouverture principale, une porte mobile par rapport à l'espace de rangement, un tiroir disposé à l'intérieur dudit espace de rangement et comprenant deux parois latérales, ledit tiroir étant apte à coulisser entre une première position a) dans laquelle ce dernier est rangé dans l'espace de rangement et une seconde position b) dans laquelle le tiroir est partiellement en dehors de l'espace de rangement, la boîte à gants comprenant, en outre, des premiers moyens de guidage du tiroir disposés de chaque côté de cette dernière, et deux parois latérales, lesdits premiers moyens de guidage du tiroir comprenant chacun un élément de guidage faisant saillie sur une des parois latérales respectives du tiroir, et une rainure intégrée dans l'une des parois latérales de la boîte à gants, ledit élément de guidage étant apte à s'engager dans ladite rainure et à coulisser le long de cette dernière.

Selon l'invention, chaque rainure présente une forme courbe ou angulaire apte à permettre l'inclinaison du tiroir vers l'utilisateur lorsque le tiroir est en position b), partiellement en dehors de l'espace de rangement.

Ainsi, l'invention fournit une boîte à gants pour véhicule automobile permettant un accès facile aux objets disposés dans le fond de la boîte à gants.

Dans différents modes de réalisation possibles, la présente invention concerne également les caractéristiques suivantes qui pourront être considérées isolément ou selon toutes leurs combinaisons techniquement possibles et apportent chacune des avantages spécifiques :
- la boîte à gants comprenant une paroi inférieure, chaque rainure présente une forme angulaire, et comprend deux parties rectilignes, dont une première partie arrière sensiblement parallèle à la paroi inférieure de la boîte à gant et une deuxième partie avant inclinée par rapport à la paroi inférieure de la boîte à gant, ladite deuxième partie avant inclinée s'étendant vers l'avant et vers la paroi inférieure de la boîte à gant,
- ladite rainure est positionnée sensiblement à mi-distance entre le fond de la boîte à gants et l'ouverture principale.

Avantageusement, le tiroir présentant une paroi avant, et une paroi arrière, la paroi arrière a une hauteur supérieure à celle de la paroi avant.
- ladite rainure présente une forme courbe en arc de cercle, l'extrémité avant de ladite rainure étant plus proche de la paroi inférieure de la boîte à gants que son extrémité arrière,
- la boîte à gants comprend deux moyens de liaison coulissants reliant la porte au tiroir, lesdits moyens de liaison coulissants étant disposés de chaque côté du tiroir et étant aptes à permettre la synchronisation du mouvement du tiroir avec celui de la porte,
- chaque moyen de liaison coulissant est positionné du côté avant de la boîte à gants, ledit moyen de liaison coulissant étant fixé à la porte à l'une de ses extrémités et relié à une articulation par l'autre de ses extrémités, ladite articulation étant connectée de façon amovible au tiroir, à proximité de son bord supérieur, et comprenant ledit élément de guidage des premiers moyens de guidage du tiroir, et ladite rainure de forme courbe étant positionnée au niveau de la partie supérieure avant de l'espace de rangement,

- la boîte à gants comprend des seconds moyens de guidage du tiroir disposés de chaque côté du tiroir, lesdits seconds moyens de guidage du tiroir étant positionnés à l'arrière de la boîte à gants et au niveau de la partie supérieure de l'espace de rangement,
- lesdits seconds moyens de guidage du tiroir comprennent chacun un élément de guidage disposé sur les parois latérales respectives du tiroir, chaque élément de guidage étant apte à coulisser le long d'une rainure rectiligne intégrée dans une des parois latérales respectives de la boîte à gants de façon à permettre le guidage de l'arrière du tiroir,
- lesdits éléments de guidage desdits premiers moyens de guidage du tiroir et lesdits éléments de guidage desdits seconds moyens de guidage du tiroir sont des ergots,
- lesdits éléments de guidage desdits premiers moyens de guidage du tiroir et lesdits éléments de guidage desdits seconds moyens de guidage du tiroir sont des galets mobiles en rotation dans la rainure qui leur est associée, lesdits galets étant mobiles en rotation autour d'un axe fixé sur les parois latérales respectives du tiroir,
- chacune des parois latérales de la boîte à gants comprend :
   - une rainure d'accès présentant deux extrémités dont une extrémité avant et une extrémité arrière, chaque rainure d'accès débouchant de la face avant la boîte à gants par son extrémité avant, et étant reliée à la rainure des premiers moyens de guidage du tiroir par son extrémité arrière, et
   - une rainure intermédiaire reliant la rainure des premiers moyens de guidage du tiroir à la rainure des seconds moyens de guidage du tiroir, lesdits éléments de guidage desdits seconds moyens de guidage du tiroir étant aptes à s'engager dans les rainures d'accès et à coulisser jusqu'à la rainure des seconds moyens de guidage du tiroir, et lesdits éléments de guidage des premiers moyens de guidage du tiroir étant aptes à s'engager dans les rainures d'accès et à coulisser jusqu'à la rainure des premiers moyens de guidage du tiroir.

Ces moyens permettent un montage/démontage facile et rapide du tiroir. Le tiroir peut s'extraire de la boîte à gants s'y insérer facilement et rapidement. Le tiroir peut être démonté rapidement afin d'accéder à l'airbag, par exemple. La boîte à gants n'à plus à être démontée entièrement pour extraire le tiroir.

L'accès des objets disposés dans le fond du tiroir est facilité également. En effet, lorsque des objets restent bloqués ou collés dans le fond du tiroir, ces moyens permettent de faire coulisser le tiroir davantage vers le passager pour lui permettre de récupérer ses objets.
- la boîte à gants comprend un corps de boîte à gants, ledit corps de boîte à gants comprenant uniquement une façade destinée à faire face au passager du véhicule, lesdites deux parois latérales, et une paroi supérieure.

Ces moyen permettent d'obtenir un espace de rangement ayant un plus grand volume (10 L à 15 L, voire plus), et une boîte à gants allégée. L'accès aux éléments disposés derrière la boîte à gants, comme l'air bag par exemple, est facilité.

Ces moyens permettent également d'accéder aux objets tombés du tiroir, lorsque ce dernier est trop rempli.

L'invention sera décrite plus en détail en référence aux dessins annexés dans lesquels :
- la figure 1 représente une boîte à gants munie d'un tiroir, selon un premier mode de réalisation de l'invention ;
- la figure 2 représente une boîte à gants munie d'un tiroir en position a), dans laquelle ce dernier est rangé dans l'espace de rangement, selon un deuxième mode de réalisation de l'invention ;
- la figure 3 représente une boîte à gants munie d'un tiroir en position b) dans laquelle le tiroir est partiellement en dehors de l'espace de rangement, selon ce deuxième mode de réalisation de l'invention ;
- la figure 4 représente l'enveloppe de la boîte à gants selon le deuxième mode de réalisation de l'invention ;
- la figure 5 représente le tiroir de la boîte à gants selon le deuxième mode de réalisation de l'invention ;
- la figure 6 représente un élément de guidage, selon un mode de réalisation possible ;
- la figure 7 représente une boîte à gants avec un tiroir facilement extractible, selon un troisième mode de réalisation de l'invention ;
- la figure 8 représente ce tiroir extrait de la boîte à gants, selon ce troisième mode de réalisation de l'invention ;
- la figure 9 représente un corps de boîte à gants allégé, selon un cinquième mode de réalisation de l'invention ;
- la figure 10 représente ce corps de boîte à gants allégé monté dans un tableau de bord ;

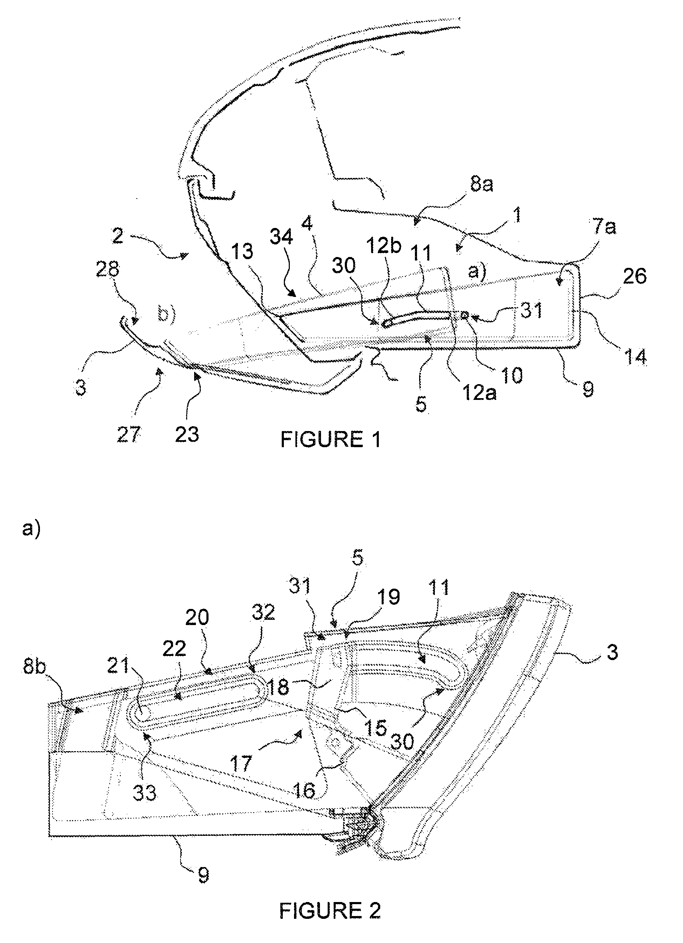

La figure 1 représente une boîte à gants munie d'un tiroir, selon un premier mode de réalisation de l'invention.

Cette boîte à gants comprend un espace de rangement 1 encastré à l'intérieur d'une planche de bord et accessible par une ouverture principale 2. La boîte à gants présente deux parois latérales 8a, 8b opposées, une paroi inférieure 9, une paroi supérieure 25 et un fond 26.

La boîte à gants comprend également une porte 3 mobile par rapport à l'espace de rangement 1, et un dispositif de verrouillage de la porte en position fermée (non représenté sur la figure 1). Ce dispositif de verrouillage permet de maintenir la porte en position fermée. La porte 3 présente une face avant 27 et une face arrière 28.

La boîte à gants comprend une articulation reliant la porte 3 au reste de la boîte à gants et permettant à la porte 3 d'être mobile en rotation par rapport à l'espace de rangement 1 entre une position fermée et une position ouverte.

La boîte à gants comprend un tiroir 4 disposé à l'intérieur de l'espace de rangement 1. Ce tiroir 4 comprend deux parois latérales 7a, 7b, un bord supérieur 34, et est apte à coulisser entre une première position a) dans laquelle ce dernier est rangé dans l'espace de rangement 1 et une seconde position b) dans laquelle il est partiellement en dehors de l'espace de rangement 1.

La boîte à gants comprend deux premiers moyens de guidage du tiroir 5 disposés de chaque côté de ce dernier de façon symétrique.

Ces premiers moyens de guidage du tiroir 5 comprennent chacun un élément de guidage 10 faisant saillie sur une des parois latérales 7a, 7b respectives du tiroir 4, et une rainure 11 qui est intégrée dans l'une des parois latérales 8a, 8b de la boîte à gants. Cet élément de guidage 10 est apte à s'engager dans, cette rainure 11 et à coulisser le long de cette dernière.

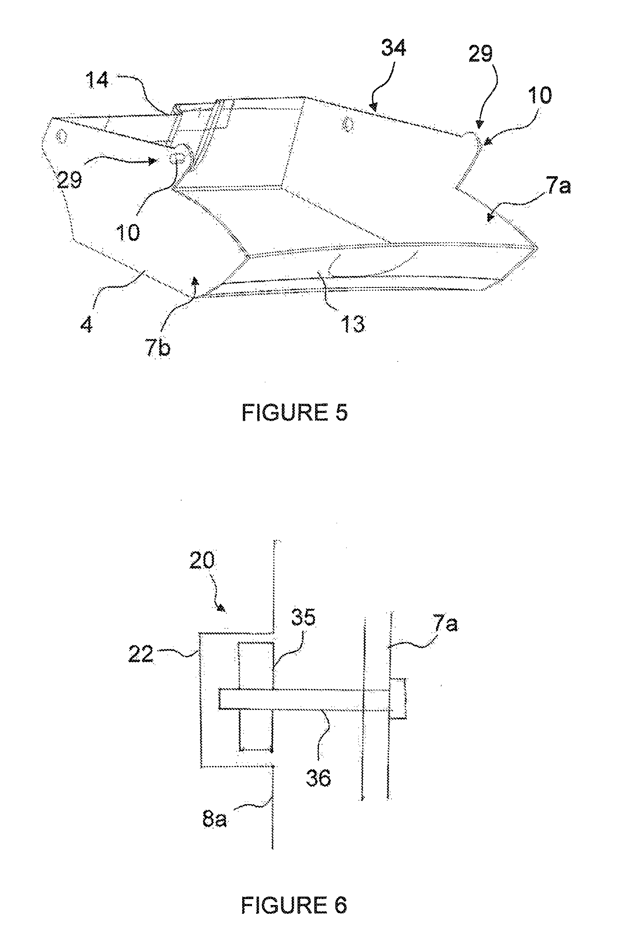

Cet élément de guidage 10 est préférentiellement un ergot, mais peut être également un galet, comme illustré sur la figure 6.

La rainure 11 présente une forme courbe ou angulaire apte à permettre l'inclinaison du tiroir 4 vers l'utilisateur lorsque le tiroir 4 est partiellement en dehors de l'espace de rangement 1. L'extrémité avant 30 de la rainure 11 est plus proche du plan formé par la paroi inférieure 9 de la boîte à gants, que son extrémité arrière 31. Autrement dit, l'extrémité avant 30 de la rainure 11 est plus basse que son extrémité arrière 31.

Dans l'exemple de la figure 1, la rainure 11 présente une forme angulaire et comprend deux parties rectilignes 12a, 12b, dont une première partie arrière 12a sensiblement parallèle à la paroi inférieure 9 de la boîte à gant et une deuxième partie avant 12b inclinée par rapport à la paroi inférieure 9 de la boîte à gant. La deuxième partie avant 12b inclinée s'étend vers l'avant et vers la paroi inférieure 9 de la boîte à gant.

Lorsque les éléments de guidage 10 glissent le long des premières parties arrière 12a des rainures 11 respectives, le tiroir 4 suit un mouvement linéaire et parallèle à la paroi inférieure 9 de la boîte à gants.

Lorsque les éléments de guidage 10 glissent le long des deuxièmes parties avant 12b inclinées de la boîte à gant, le tiroir 4 s'incline par rapport à la paroi inférieure 9 de la boîte à gants et vers le passager. Les éléments de guidage 10 sont mobiles en rotation dans les rainures 11, ce qui permet cette inclinaison.

Préférentiellement, moins de la moitié du tiroir 4 ressort de l'espace de rangement 1 lorsque le tiroir 4 est en position b), en dehors de l'espace de rangement 1.

Préférentiellement, les rainures 11 sont positionnées sensiblement à mi-distance entre le fond de la boîte à gants 26 et l'ouverture principale 2.

Chaque deuxième partie avant 12b des rainures 11 est inclinée d'un angle compris entre 2° et 30° par rapport à la première partie arrière 12a des rainures 11.

Avantageusement, cet angle est compris entre 5° et 10°, permettant une inclinaison faible du tiroir 4 lorsqu'il est en position b).

Le tiroir 4 présente une paroi avant 13, et une paroi arrière 14 de hauteur supérieure à celle de la paroi avant 13.

La forme de l'espace de rangement 1 (sa hauteur par exemple) est adaptée pour permettre le libre déplacement de la partie arrière du tiroir 4 entre les positions a) et b).

En position b) dans laquelle le tiroir 4 est partiellement en dehors de l'espace de rangement 1, le bord inférieur 23 de ce dernier est en appui sur la face arrière de la porte 28.

La face arrière de la porte 28 peut avantageusement présenter une contre forme adaptée à la forme de la paroi avant 13 du tiroir 4 pour maintenir ce dernier en position b) de façon stable.

Dans cet exemple, le tiroir 4 est actionné manuellement. Lorsque la porte 3 est ouverte, l'utilisateur tire le tiroir 4 vers lui jusqu'à la position b) dans laquelle le tiroir 4 est partiellement en dehors de l'espace de rangement 1.

Le tiroir étant en position b), la porte 3 peut être refermée rapidement, entraînant en même temps le tiroir 4 vers sa position rangée a).

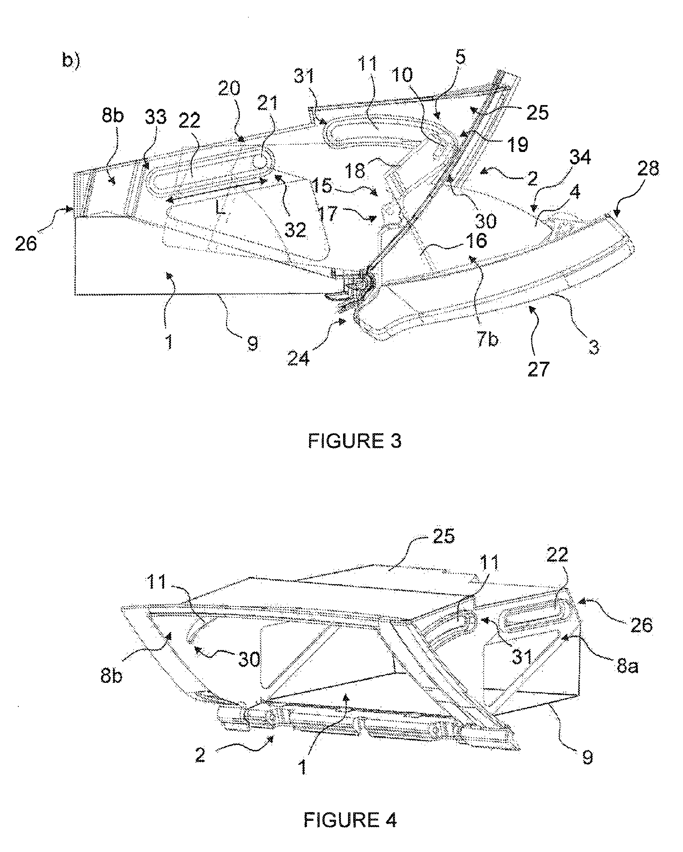

Les figures 2 et 3 représentent une boîte à gants munie d'un tiroir 4, selon un deuxième mode de réalisation de l'invention.

La figure 2 représente la boîte à gants lorsque le tiroir est en position a), dans laquelle ce dernier est rangé dans l'espace de rangement.

La figure 3 représente cette boîte à gants lorsque le tiroir est en position b), dans laquelle le tiroir est partiellement en dehors de l'espace de rangement.

Dans cet exemple, la rainure 11 présente une forme courbe en arc de cercle, comme illustrée sur les figures 2 à 4. L'intérieur de cette rainure 11 (partie concave) est orienté vers la paroi inférieure 9 de la boîte à gants.

Les rainures 11 peuvent consister en des ouvertures ou fentes courbées dans les parois latérales 8a, 8b respectives de la boîte à gants.

La boîte à gants comprend deux moyens de liaison coulissants 15 reliant la porte 3 au tiroir 4 et disposés de chaque côté de ce dernier. Ces moyens de liaison coulissants 15 sont aptes à synchroniser le mouvement du tiroir 4 avec celui de la porte 3. L'ouverture de la porte 3 entraîne le déplacement du tiroir 4.

Chaque moyen de liaison coulissant 15 est positionné du côté avant de la boîte à gants et présente une partie anguleuse 17. Le moyen de liaison coulissant 15 présente une forme générale en « V ».

Le moyen de liaison coulissant 15 est fixé à la porte 3 à l'une de ses extrémités et est relié à une articulation 19 par l'autre de ses extrémités.

Plus précisément, chaque moyen de liaison coulissant 15 comprend un bras inférieur 16 fixé à la porte 3 à l'une de ses extrémités. Plus particulièrement, ce bras inférieur 16 est fixé à proximité du bord arrière 24 de la porte.

Ce bras inférieur 16 est relié, à l'autre de ses extrémités, à un bras supérieur 18, lui-même relié à l'articulation 19.

Lorsque le tiroir 4 est en position a) dans laquelle ce dernier est rangé dans l'espace de rangement 1, le bras supérieur 18 est sensiblement perpendiculaire à la paroi inférieure 9 de la boîte à gants. Quant au bras inférieur 16, il est sensiblement perpendiculaire aux parois avant et arrière de la porte 3.

L'articulation 19 est connectée de façon amovible au tiroir 4, à proximité de son bord supérieur 34, et comprend l'élément de guidage 10 des premiers moyens de guidage du tiroir 5. La rainure 11 de forme courbe est positionnée au niveau de la partie supérieure avant de l'espace de rangement 1.

Préférentiellement, le centre de l'arc de cercle décrit par cette rainure 11 est positionné sensiblement au niveau de l'articulation reliant la porte 3 au reste de la boîte à gants.

La figure 5 représente un exemple de tiroir 4 de la boîte à gants selon ce deuxième mode de réalisation de l'invention. Sur cette figure 5, seuls les éléments de guidage 10 des premiers moyens de guidage du tiroir 5 sont représentés.

Ces éléments de guidage 10 sont disposés chacun sur une protubérance 29 faisant saillie sur le bord supérieur 34 du tiroir, parallèlement aux parois latérales 7a, 7b du tiroir, et vers l'extérieur de ce dernier. Chaque protubérance 29 est légèrement inclinée vers la paroi avant 13 du tiroir.

Le bord supérieur 34 du tiroir présente un décrochement vers le bas, au niveau de cette protubérance 29, de sorte à obtenir un tiroir 4 ayant une paroi avant 13 de hauteur inférieure à sa paroi arrière 14.

La boîte à gants comprend des seconds moyens de guidage du tiroir 20 disposés de chaque côté du tiroir 4. Les seconds moyens de guidage du tiroir 20 sont positionnés à l'arrière de la boîte à gants et au niveau de la partie supérieure de l'espace de rangement 1.

Les seconds moyens de guidage du tiroir 20 comprennent chacun un élément de guidage 21 disposé sur les parois latérales respectives du tiroir 7a, 7b. Chaque élément de guidage 21 est apte à coulisser le long d'une rainure rectiligne 22 intégrée dans une des parois latérales 8a, 8b respective de la boîte à gants, de façon à permettre le guidage de l'arrière du tiroir 4.

Dans un mode de réalisation possible, représenté sur la figure 5, cet élément de guidage 21 est un ergot.

Dans un autre mode de réalisation possible, représenté sur la figure 6, les éléments de guidage 21 des seconds moyens de guidage du tiroir 20 sont des galets 35 mobiles en rotation dans la rainure 22 qui leur est associée.

Les éléments de guidage 10 des premiers moyens de guidage du tiroir 5 peuvent également être des galets 35 mobiles en rotation dans la rainure 11 qui leur est associée.

Ces galets 35 sont mobiles en rotation autour d'un axe 36 fixé sur les parois latérales respectives du tiroir 7a, 7b.

Les rainures 11, 22 peuvent déboucher à l'extérieure de la boîte à gant ou ne pas déboucher à l'extérieure de la boîte à gant.

La rainure rectiligne 22 est inclinée par rapport au plan formé par la paroi inférieure 9 de la boîte à gants. L'extrémité arrière 33 de la rainure rectiligne 22 est plus proche de la paroi inférieure 9 de la boîte à gants que son extrémité avant 32.

Le tiroir 4 peut coulisser sur une distance L comprise entre 30 mm et 150 mm, et préférentiellement sur une distance de 95 mm. Par exemple, un angle d'ouverture de la porte de 43,75° correspond à un déplacement du tiroir 4 de 94,21 mm. Plus l'angle d'ouverture de la porte est important, plus la course du tiroir 4 est importante. Le tiroir 4 peut s'incliner d'un angle compris entre 5° et 20°, et préférentiellement de 10°, par rapport à la paroi inférieure 9 de la boîte à gants.

Le volume effectif de la boîte à gants est amélioré d'au moins 25%. Par exemple, ce volume effectif peut passer de 73% à 98% en utilisant l'invention.

Le tiroir 4 peut être compartimenté, ce qui évite aux objets de se déplacer pendant l'inclinaison du tiroir 4.

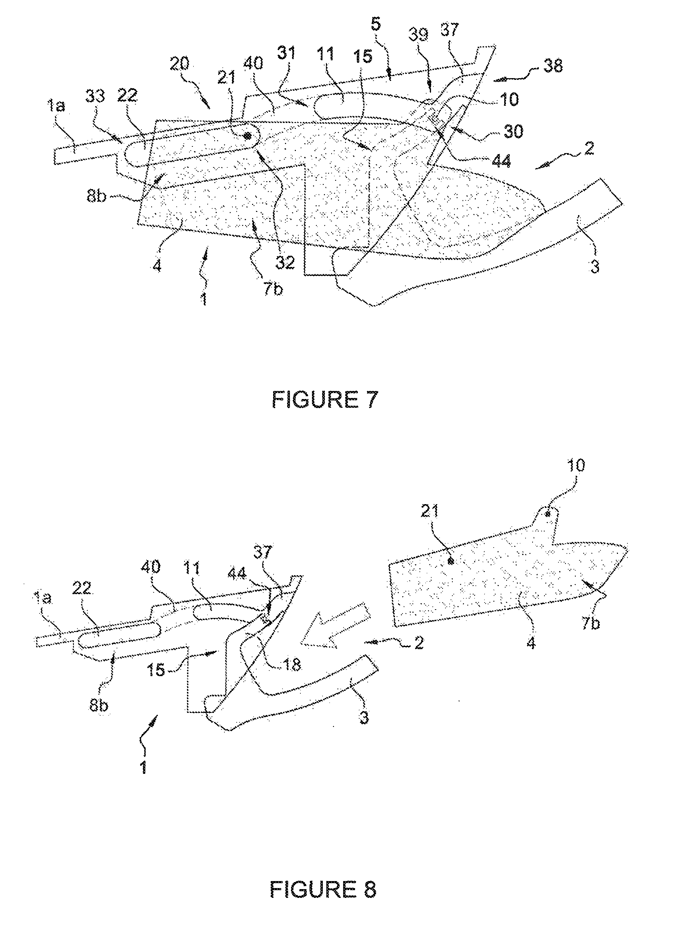

La figure 7 représente une boîte à gants permettant au tiroir 4 de s'extraire et de s'insérer facilement et rapidement dans cette dernière, selon un troisième mode de réalisation de l'invention.

Chacune des parois latérales 8a, 8b de la boîte à gants comprend une rainure d'accès 37 présentant deux extrémités dont une extrémité avant 38 et une extrémité arrière 39. Chaque rainure d'accès 37 débouche de la face avant la boîte à gants par son extrémité avant 38, et est reliée à la rainure 11 des premiers moyens de guidage du tiroir 5 par son extrémité arrière 39.

Préférentiellement, l'extrémité arrière 39 de chaque rainure d'accès 37 est reliée à l'extrémité avant 30 de la rainure 11 des premiers moyens de guidage du tiroir 5.

Ces rainures d'accès 37 peuvent consister en des fentes et être courbées, avec une forme générale en S.

Préférentiellement, l'extrémité avant 38 débouchante de chaque rainure d'accès 37 se situe au dessus de l'extrémité avant 30 de la rainure 11 des premiers moyens de guidage du tiroir 5. Au niveau de cette extrémité avant 38, les rainures d'accès 37 présentent une forme élargie sensiblement en V.

Chacune des parois latérales 8a, 8b du corps 1 a de la boîte à gants comprend une rainure intermédiaire 40 ou de transition, reliant la rainure 11 des premiers moyens de guidage du tiroir 5 à la rainure 22 des seconds moyens de guidage du tiroir 20.

Préférentiellement, l'une des extrémités de la rainure intermédiaire 40 est reliée à l'extrémité avant 32 de la rainure 22 des seconds moyens de guidage du tiroir 20, et l'autre de ses extrémités est reliée à l'extrémité arrière 31 de la rainure 11 des premiers moyens de guidage du tiroir 5.

Chaque élément de guidage 21 des seconds moyens de guidage du tiroir 20 est apte à s'engager dans une des rainures d'accès 37, puis à coulisser le long de la rainure 11 des premiers moyens de guidage du tiroir 5, puis le long de la rainure intermédiaire 40, jusqu'à la rainure 22 des seconds moyens de guidage du tiroir 20.

Chaque élément de guidage 10 des premiers moyens de guidage du tiroir 5 est apte à s'engager dans une des rainures d'accès 37 et à coulisser jusqu'à la rainure 11 des premiers moyens de guidage du tiroir 5.

Les rainures d'accès 37, les rainures 11 des premiers moyens de guidage du tiroir 5, les rainures intermédiaires 40 et les rainures 22 des seconds moyens de guidage du tiroir 20 forment un canal continu.

La figure 8 représente le tiroir 4 extrait de la boîte à gants. Ce canal continu permet de monter et démonter le tiroir 4 rapidement.

Les éléments de guidage 10 des premiers moyens de guidage du tiroir 5 comprennent des axes, plus longs que ceux des éléments de guidage 21 des seconds moyens de guidage du tiroir 20.

Les bras supérieurs 18 des moyens de liaison coulissants 15 ou limiteurs se terminent par une fente 44, formant une fourche apte à recevoir un des éléments de guidage 10 des premiers moyens de guidage du tiroir 5.

Une fois le tiroir 4 monté dans le corps de boîte à gants 1 a, les axes des éléments de guidage 10 des premiers moyens de guidage du tiroir 5 dépassent du corps de boîte à gants 1a. Les éléments de guidage 10 des premiers moyens de guidage du tiroir 5 peuvent alors s'engager dans la fente 44 des moyens de liaison coulissants 15.

Lorsque la boîte à gants ne comprend que les premiers moyens de guidage du tiroir 5, cette dernière ne comprend que des rainures d'accès 37, et pas de rainures intermédiaires 40.

La boîte à gants peut comprendre un corps de boîte à gants 1 a. Dans les exemples décrits précédemment, le corps de boîte à gants 1a présente une forme de cuve et comprend les rainures 11 des premiers moyens de guidage du tiroir 5 et les rainures 22 des seconds moyens de guidage du tiroir 20. Le corps de boîte à gants 1a peut également comprendre des rainures intermédiaires 40 et des rainures d'accès 37.

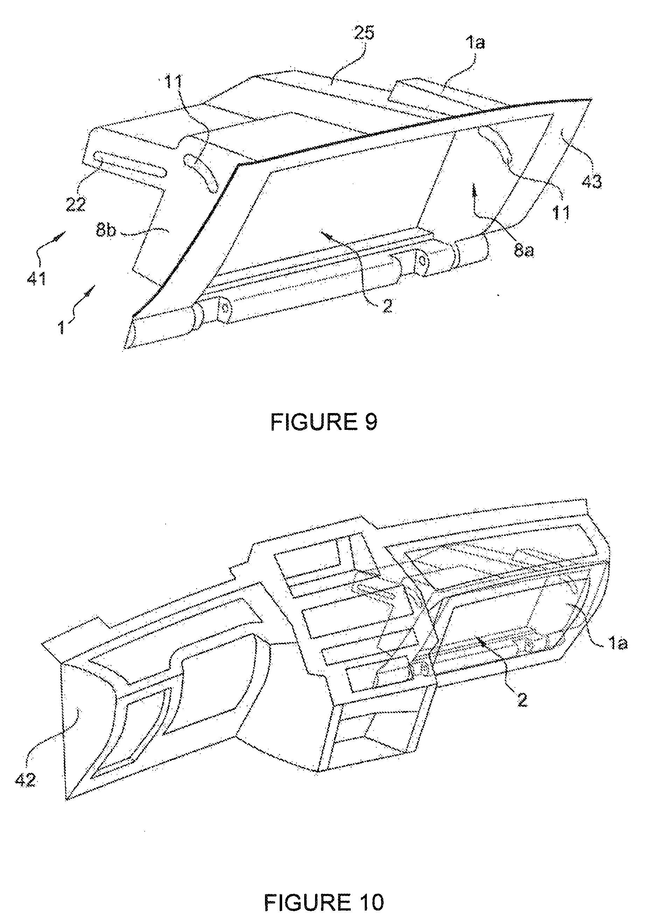

Les figures 9 et 10 représentent une boîte à gants, selon un quatrième mode de réalisation de l'invention.

Le fond de la boîte à gants peut comprendre un ou plusieurs évidements 41 qui sont cachés par le tiroir 4 amovible.

En particulier, le corps de la boîte à gants 1 a peut ne pas comprendre de fond ou paroi arrière, ni de paroi inférieure, afin de simplifier sa conception et de l'alléger.

La figure 9 représente un corps de boîte à gants 1 a comprenant un seul évidemment 41 qui se confond avec l'espace de rangement 1. La figure 10 représente ce corps de boîte à gants 1 a monté dans un tableau de bord 42.

Le corps de la boîte à gants 1 a comprend seulement une façade 43 destinée à faire face au passager du véhicule, deux parois latérales 8a, 8b comprenant les rainures ou fentes décrites selon tous les modes de réalisations possibles précédents, et une paroi supérieure 25.

La présence de la paroi supérieure 25 permet de maintenir la rigidité du corps de la boîte à gants 1 a.

Dans un autre mode de réalisation possible, le corps de boîte à gants peut être supprimé, les différentes rainures étant intégrées directement dans la planche de bord 42.

L'absence de fond et de paroi inférieure permet de fournir un espace de rangement 1 ayant un plus grand volume (10 L à 15 L, voire plus). Le tiroir 4 peut se déplacer avec un débattement plus grand.

De plus, l'invention fournit une boîte à gants allégée et plus accessible (accès à l'air bag par exemple).

Ainsi, l'invention fournit une boîte à gants pour véhicule automobile plus légère, permettant un accès facile aux objets disposés dans le fond de la boîte à gants, et un montage/démontage facile du tiroir.

## Revendications

1. Boîte à gants pour véhicule automobile comprenant un espace de rangement (1) encastré à l'intérieur d'une planche de bord et accessible par une ouverture principale (2), une porte (3) mobile par rapport à l'espace de rangement (1), un tiroir (4) disposé à l'intérieur dudit espace de rangement (1) et comprenant deux parois latérales (7a, 7b), ledit tiroir (4) étant apte à coulisser entre une première position a) dans laquelle ce dernier est rangé dans l'espace de rangement (1) et une seconde position b) dans laquelle le tiroir (4) est partiellement en dehors de l'espace de rangement (1), ladite boîte à gants comprenant, en outre, des premiers moyens de guidage du tiroir (5) disposés de chaque côté de cette dernière, et deux parois latérales (8a, 8b), lesdits premiers moyens de guidage du tiroir (5) comprenant chacun un élément de guidage (10) faisant saillie sur une des parois latérales (7a, 7b) respectives du tiroir (4) et une rainure (11) intégrée dans l'une des parois latérales (8a, 8b) de la boîte à gants, ledit élément de guidage (10) étant apte à s'engager dans ladite rainure (11) et à coulisser le long de cette dernière, **caractérisée en ce que** :
- chaque rainure (11) présente une forme courbe ou angulaire apte à permettre l'inclinaison du tiroir (4) vers l'utilisateur lorsque le tiroir (4) est en position b), partiellement en dehors de l'espace de rangement (1).

2. Boîte à gants pour véhicule automobile selon la revendication 1, **caractérisée en ce que**, ladite boîte à gants comprenant une paroi inférieure (9), chaque rainure (11) présente une forme angulaire, et comprend deux parties rectilignes (12a, 12b), dont une première partie arrière (12a) sensiblement parallèle à la paroi inférieure (9) de la boîte à gant et une deuxième partie avant (12b) inclinée par rapport à la paroi inférieure (9) de la boîte à gant, ladite deuxième partie avant (12b) inclinée s'étendant vers l'avant et vers la paroi inférieure (9) de la boîte à gant.

3. Boîte à gants pour véhicule automobile selon la revendication 1, **caractérisée en ce que** ladite rainure (11) présente une forme courbe en arc de cercle, l'extrémité avant (30) de ladite rainure (11) étant plus proche de la partie inférieure de la boîte à gants que son extrémité arrière (31).

4. Boîte à gants pour véhicule automobile selon la revendication 3, **caractérisée en ce qu'**elle comprend deux moyens de liaison coulissants (15) reliant la porte (3) au tiroir (4), lesdits moyens de liaison coulissants (15) étant disposés de chaque côté du tiroir (4) et étant aptes à permettre la synchronisation du mouvement du tiroir (4) avec celui de la porte (3).

5. Boîte à gants pour véhicule automobile selon la revendication 4, **caractérisée en ce que** chaque moyen de liaison coulissant (15) est positionné du côté avant de la boîte à gants, ledit moyen de liaison coulissant (15) étant fixé à la porte (3) à l'une de ses extrémités et relié à une articulation (19) à l'autre de ses extrémités, ladite articulation (19) étant connectée de façon amovible au tiroir (4), à proximité de son bord supérieur (34), et comprenant ledit élément de guidage (10) des premiers moyens de guidage du tiroir (5), et ladite rainure (11) de forme courbe étant positionnée au niveau de la partie supérieure avant de l'espace de rangement (1).

6. Boîte à gants pour véhicule automobile selon l'une quelconque des revendications 1 à 5, **caractérisée en ce qu'**elle comprend des seconds moyens de guidage du tiroir (20) disposés de chaque côté du tiroir (4), lesdits seconds moyens de guidage du tiroir (20) étant positionnés à l'arrière de la boîte à gants et au niveau de la partie supérieure de l'espace de rangement (1).

7. Boîte à gants pour véhicule automobile selon la revendication 6, **caractérisée en ce que** lesdits seconds moyens de guidage du tiroir (20) comprennent chacun un élément de guidage (21) disposé sur les parois latérales respectives du tiroir (7a, 7b), chaque élément de guidage (21) étant apte à coulisser le long d'une rainure rectiligne (22) intégrée dans une des parois latérales (8a, 8b) respectives de la boîte à gants de façon à permettre le guidage de l'arrière du tiroir.

8. Boîte à gants pour véhicule automobile selon l'une quelconque des revendications 1 à 7, **caractérisée en ce que** lesdits éléments de guidage (10) desdits premiers moyens de guidage du tiroir (5) et lesdits éléments de guidage (21) desdits seconds moyens de guidage du tiroir (20) sont des galets (35) mobiles en rotation dans la rainure qui leur est associée, lesdits galets (35) étant mobiles en rotation autour d'un axe (36) fixé sur les parois latérales respectives du tiroir (7a, 7b).

9. Boîte à gants pour véhicule automobile selon l'une quelconque des revendications 6 à 8, **caractérisée en ce que** chacune des parois latérales (8a, 8b) de la boîte à gants comprend :
- une rainure d'accès (37) présentant deux extrémités dont une extrémité avant (38) et une extrémité arrière (39), chaque rainure d'accès (37) débouchant de la face avant la boîte à gants par son extrémité avant (38), et étant reliée à la rainure (11) des premiers moyens de guidage du tiroir (5) par son extrémité arrière (39), et
- une rainure intermédiaire (40) reliant la rainure (11) des premiers moyens de guidage du tiroir (5) à la rainure (22) des seconds moyens de guidage du tiroir (20), lesdits éléments de guidage (21) desdits seconds moyens de guidage du tiroir (20) étant aptes à s'engager dans les rainures d'accès (37) et à coulisser jusqu'à la rainure (22) des seconds moyens de guidage du tiroir (20), et lesdits éléments de guidage (10) des premiers moyens de guidage du tiroir (5) étant aptes à s'engager dans les rainures d'accès (37) et à coulisser jusqu'à la rainure (11) des premiers moyens de guidage du tiroir (5).

10. Boîte à gants pour véhicule automobile selon l'une quelconque des revendications 3 à 9, **caractérisée en ce qu'**elle comprend un corps de boîte à gants (1a), ledit corps de boîte à gants (1 a) comprenant uniquement une façade (43) destinée à faire face au passager du véhicule, lesdites deux parois latérales (8a, 8b), et une paroi supérieure (25).

## Patentansprüche

1. Handschuhfach für ein Kraftfahrzeug, umfassend einen Stauraum (1), der in einem Armaturenbrett eingelassen und über eine Hauptöffnung (2) zugänglich ist, eine gegenüber dem Stauraum (1) bewegliche Tür (3), eine Schublade (4), die innerhalb des Stauraums (1) angeordnet ist und zwei Seitenwände (7a, 7b) umfasst, wobei die Schublade (4) geeignet ist, zwischen einer ersten Position a), in der letztere in dem Stauraum (1) verstaut ist, und einer zweiten Position b), in der die Schublade (4) sich teilweise außerhalb des Stauraums (1) befindet, zu gleiten, wobei das Handschuhfach ferner erste Mittel zum Führen der Schublade (5), die auf jeder Seite von letzterem angeordnet sind, sowie zwei Seitenwände (8a, 8b) umfasst, wobei die ersten Mittel zum Führen der Schublade (5) jeweils ein Führungselement (10), welches an einer der jeweiligen Seitenwände (7a, 7b) der Schublade (4) vorspringt, und eine Nut (11), welche in eine der Seitenwände (8a, 8b) des Handschuhfachs integriert ist, umfassen, wobei das Führungselement (10) geeignet ist, in die Nut (11) einzugreifen und entlang dieser letzteren zu gleiten, **dadurch gekennzeichnet, dass**:
- jede Nut (11) eine gebogene oder winkelige Form aufweist, die geeignet ist, die Neigung der Schublade (4) in Richtung des Benutzers zu ermöglichen, wenn die Schublade (4) sich in Position b), teilweise außerhalb des Stauraums (1) befindet.

2. Handschuhfach für ein Kraftfahrzeug nach Anspruch 1, **dadurch gekennzeichnet, dass**, da das Handschuhfach eine untere Wand (9) umfasst, jede Nut (11) eine winkelige Form aufweist und zwei geradlinige Teile (12a, 12b) umfasst, darunter ein erster hinterer Teil (12a), der zu der unteren Wand (9) des Handschuhfachs im Wesentlichen parallel verläuft, und ein zweiter vorderer Teil (12b), der gegenüber der unteren Wand (9) des Handschuhfachs geneigt ist, wobei der geneigte zweite vordere Teil (12b) nach vorn und in Richtung der unteren Wand (9) des Handschuhfachs verläuft.

3. Handschuhfach für ein Kraftfahrzeug nach Anspruch 1, **dadurch gekennzeichnet, dass** die Nut (11) eine gekrümmte Kreisbogenform aufweist, wobei das vordere Ende (30) der Nut (11) dem unteren Teil des Handschuhfachs näher ist als ihr hinteres Ende (31).

4. Handschuhfach für ein Kraftfahrzeug nach Anspruch 3, **dadurch gekennzeichnet, dass** es zwei verschiebliche Verbindungsmittel (15), welche die Tür (3) mit der Schublade (4) verbinden, umfasst, wobei die verschieblichen Verbindungsmittel (15) auf jeder Seite der Schublade (4) angeordnet und geeignet sind, das Synchronisieren der Bewegung der Schublade (4) mit derjenigen der Tür (3) zu ermöglichen.

5. Handschuhfach für ein Kraftfahrzeug nach Anspruch 4, **dadurch gekennzeichnet, dass** jedes verschiebliche Verbindungsmittel (15) auf der Vorderseite des Handschuhfachs angeordnet ist, wobei das verschiebliche Verbindungsmittel (15) an einem seiner Enden an der Tür (3) befestigt ist und an dem anderen seiner Enden mit einem Gelenk (19) verbunden ist, wobei das Gelenk (19) mit der Schublade (4), in der Nähe ihres oberen Randes (34), lösbar verbunden ist, und das Führungselement (10) der ersten Mittel zum Führen der Schublade (5) umfasst, und wobei die Nut (11) gebogener Form im Bereich des oberen vorderen Teils des Stauraums (1) angeordnet ist.

6. Handschuhfach für ein Kraftfahrzeug nach einem der Ansprüche 1 bis 5, **dadurch gekennzeichnet, dass** es zweite Mittel zum Führen der Schublade (20) umfasst, die auf jeder Seite der Schublade (4) angeordnet sind, wobei die zweiten Mittel zum Führen der Schublade (20) hinten im Handschuhfach und im Bereich des oberen Teils des Stauraums (1) angeordnet sind.

7. Handschuhfach für ein Kraftfahrzeug nach Anspruch 6, **dadurch gekennzeichnet, dass** die zweiten Mittel zum Führen der Schublade (20) jeweils ein Führungselement (21) umfassen, das an den jeweiligen Seitenwänden der Schublade (7a, 7b) angeordnet ist, wobei jedes Führungselement (21) geeignet ist, entlang einer geradlinigen Nut (22), die in eine der jeweiligen Seitenwände (8a, 8b) des Handschuhfachs integriert ist, zu gleiten, um die Führung des hinteren Teils der Schublade zu ermöglichen.

8. Handschuhfach für ein Kraftfahrzeug nach einem der Ansprüche 1 bis 7, **dadurch gekennzeichnet, dass** die Führungselemente (10) der ersten Mittel zum Führen der Schublade (5) und die Führungselemente (21) der zweiten Mittel zum Führen der Schublade (20) Rollen (35) sind, die in der Nut, welche ihnen zugeordnet ist, drehbeweglich sind, wobei die Rollen (35) um eine an den jeweiligen Seitenwänden der Schublade (7a, 7b) befestigte Achse drehbeweglich sind.

9. Handschuhfach für ein Kraftfahrzeug nach einem der Ansprüche 6 bis 8, **dadurch gekennzeichnet, dass** jede der Seitenwände (8a, 8b) des Handschuhfachs umfasst:
- eine Zugangsnut (37), die zwei Enden aufweist, darunter ein vorderes Ende (38) und ein hinteres Ende (39), wobei jede Zugangsnut (37) über ihr vorderes Ende (38) aus der Seite vor dem Handschuhfach ausmündet und über ihr hinteres Ende (39) mit der Nut (11) der ersten Mittel zum Führen der Schublade (5) verbunden ist, und
- eine Zwischennut (40), welche die Nut (11) der ersten Mittel zum Führen der Schublade (5) mit der Nut (22) der zweiten Mittel zum Führen der Schublade (20) verbindet, wobei die Führungselemente (21) der zweiten Mittel zum Führen der Schublade (20) geeignet sind, in die Zugangsnuten (37) einzugreifen und bis zu der Nut (22) der zweiten Mittel zum Führen der Schublade (20) zu gleiten, und wobei die Führungselemente (10) der ersten Mittel zum Führen der Schublade (5) geeignet sind, in die Zugangsnuten (37) einzugreifen und bis zu der Nut (11) der ersten Mittel zum Führen der Schublade (5) zu gleiten.

10. Handschuhfach für ein Kraftfahrzeug nach einem der Ansprüche 3 bis 9, **dadurch gekennzeichnet, dass** es einen Handschuhfachkörper (1 a), wobei der Handschuhfachkörper (1a) lediglich eine Vorderseite (43) umfasst, die dazu bestimmt ist, dem Insasse des Fahrzeugs gegenüberzuliegen, die beiden Seitenwände (8a, 8b) sowie eine obere Wand (25) umfasst.

## Claims

1. An automobile glove compartment comprising a storage space (1) built into a dashboard and accessible through a main opening (2), a door (3) that is movable with respect to the storage space (1), a drawer (4) arranged inside said storage space (1) and comprising two side walls (7a, 7b), said drawer (4) being adapted to slide between a first position a), in which the latter is stored in the storage space (1), and a second position b), in which the drawer (4) is partially outside the storage space (1), wherein said glove compartment further comprises first drawer guiding means (5) arranged on each side of the latter, and two side walls (8a, 8b), said first drawer guiding means (5) each comprising a guiding member (10) projecting out from one of the respective side walls (7a, 7b) of the drawer (4), and a groove (11) integrated in one of the side walls (8a, 8b) of the glove compartment, said guiding member (10) being adapted to engage into said groove (11) and to slide along the latter, **characterized in that**:
- each groove (11) has a curved or angular shape adapted to permit the tilt of the drawer (4) toward the user when the drawer (4) is in position b), partially outside the storage space (1).

2. An automobile glove compartment according to claim 1, **characterized in that** said glove compartment comprising a lower wall (9), each groove (11) has an angular shape and comprises two rectilinear sections (12a, 12b), including a first rear section (12a) substantially parallel to the lower wall (9) of the glove compartment, and a second front section (12b) tilted with respect to the lower wall (9) of the glove compartment, said tilted second front section (12b) extending forward and toward the lower wall (9) of the glove compartment.

3. An automobile glove compartment according to claim 1, **characterized in that** said groove (11) has a circular arc curved shape, the front end (30) of said groove (11) being closer to the lower wall of the glove compartment than its rear end (31).

4. An automobile glove compartment according to claim 3, **characterized in that** it comprises two sliding connection means (15) that connect the door (3) to the drawer (4), said sliding connection means (15) being arranged on each side of the drawer (4) and being adapted for synchronizing the movement of the drawer (4) with that of the door (3).

5. An automobile glove compartment according to claim 4, **characterized in that** each sliding connection means (15) is positioned on the front side of the glove compartment, said sliding connection means (15) being fixed to the door (3) at one of its ends and connected to an articulation (19) by the other one of its ends, said articulation (19) being detachably connected to the drawer (4), at the vicinity of the upper edge (34) thereof, and comprising said guiding member (10) of the first drawer guiding means (5), and said curved groove (11) being positioned at the level of the upper front part of the storage space (1).

6. An automobile glove compartment according to any one of claims 1 to 5, **characterized in that** it comprises second drawer guiding means (20) arranged on each side of the drawer (4), said second drawer guiding means (20) being positioned at the back of the glove compartment and at the level of the upper part of the storage space (1).

7. An automobile glove compartment according to claim 6, **characterized in that** said second drawer guiding means (20) each comprise a guiding member (21) arranged on the respective side walls (7a, 7b) of the drawer, each guiding member (21) being adapted to slide along a rectilinear groove (22) integrated in one of the respective side walls (8a, 8b) of the glove compartment, in order to permit the guidance of the drawer back.

8. An automobile glove compartment according to any one of claims 1 to 7, **characterized in that** said guiding members (10) of said first drawer guiding means (5) and said guiding members (21) of said second drawer guiding means (20) are rollers (35) that are rotationally movable in the groove associated thereto, said rollers (35) being rotationally movable around an axis (36) fixed to the respective side walls (7a, 7b) of the drawer.

9. An automobile glove compartment according to any one of claims 6 to 8, **characterized in that** each of the side walls (8a, 8b) of the glove compartment comprises:
- an access groove (37) having two ends, including one front end (38) and one rear end (39), each access groove (37) opening into the front face of the glove compartment at its front end (38), and being connected to the groove (11) of the first drawer guiding means (5) at its rear end (39), and
- an intermediate groove (40) connecting the groove (11) of the first drawer guiding means (5) to the groove (22) of the second drawer guiding means (20), said guiding members (21) of said second drawer guiding means (20) being adapted to engage into the access grooves (37) and to slide up to the groove (22) of the second drawer guiding means (20), and said guiding members (10) of the first drawer guiding means (5) being adapted to engage into the access grooves (37) and to slide up to the groove (11) of the first drawer guiding means (5).

10. An automobile glove compartment according to any one of claims 3 to 9, **characterized in that** it comprises a glove compartment body (1a), said glove compartment body (1a) comprising only one front (43) intended to face the passenger of the vehicle, said two side walls (8a, 8b), and one upper wall (25).
